# EUROPEAN PATENT APPLICATION

(11) **EP 4 316 414 A1**
(43) Date of publication of application: **07.02.2024**
(21) Application number: 22779668.7
(22) Date of filing: 24.02.2022
(51) Int. Cl.: A61B 90/20, G06T 7/00, G01N 33/48, G01N 33/53

(54) **MEDICAL IMAGE ANALYSIS DEVICE, MEDICAL IMAGE ANALYSIS METHOD, AND MEDICAL IMAGE ANALYSIS SYSTEM**

(30) Priority: 29.03.2021 JP 2021055964
(71) Applicant: Sony Group Corporation, Tokyo 108-0075 (JP)
(72) Inventor: ENOKI Junichiro, Tokyo 108-0075 (JP)
(74) Representative: D Young & Co LLP
(86) International application number: PCT/JP2022/007460
(87) International publication number: WO 2022/209443

(57) **Abstract**

Information regarding a tissue present at a boundary of a region to be detected of the tissue is detected with high accuracy.

A medical image analysis device of the presents disclosure includes a region setting unit configured to set, in a processing target image obtained by imaging a biological tissue, a first region and a second region partially overlapping the first region, and a specifying unit configured to specify a first tissue region and a second tissue region, the first tissue region being a region of a tissue included in the first region, the second tissue region being a region of a tissue included in the second region. The specifying unit includes an overlap processing unit configured to process the first tissue region and the second tissue region at least partially overlapping the first tissue region to set a third tissue region.

## Description

### TECHNICAL FIELD

The present disclosure relates to a medical image analysis device, a medical image analysis method, and a medical image analysis system.

### BACKGROUND ART

Studies about the use, as a biomarker, of information extracted from an image (pathological image or pathological slide) obtained by imaging a sample containing a biological component such as a cell are making progress. The information to be extracted includes the number of cell types, the density of cells for each cell type, the positional relationship of cells for each cell type, and the like. In order to use heteromorphism to distinguish tumor cells, it is necessary to accurately extract cell shape information and the like. Examples of the cell shape information include a nuclear-cytoplasmic ratio (NC ratio). Therefore, pathological image analysis in which the shapes of all cells are extracted from a digital pathological image (sometimes referred to as a whole slide image (WSI)) obtained by digitizing a pathological image becomes important.

The following Patent Document 1 discloses a method for extracting a boundary of a cell nucleus from a digital pathological image. This method increases cell shape detection performance by setting an optimum parameter (threshold) for each of a plurality of small regions obtained by dividing the digital pathological image.

### CITATION LIST

### PATENT DOCUMENT

Patent Document 1: Japanese Translation of PCT Application No. 2017-521779

### SUMMARY OF THE INVENTION

### PROBLEMS TO BE SOLVED BY THE INVENTION

The method disclosed in Patent Document 1, however, has a problem that a cell present at the boundary (over the boundary) of a small region is detected with lower accuracy. This problem does not occur when the cell shape and the like are extracted from the entire digital pathological image without dividing the digital pathological image into small regions. In order to acquire detailed cell shape information, it is, however, necessary to process, for example, a huge image captured at a high magnification, which consumes a large amount of memory and is more computationally intensive.

The present disclosure provides a medical image analysis device, a medical image analysis method, and a medical image analysis system that detect, with high accuracy, information regarding a tissue present at a boundary of a region to be detected of a tissue.

### SOLUTIONS TO PROBLEMS

A medical image analysis device of the presents disclosure includes a region setting unit configured to set, in a processing target image obtained by imaging a biological tissue, a first region and a second region partially overlapping the first region, and a specifying unit configured to specify a first tissue region and a second tissue region, the first tissue region being a region of a tissue included in the first region, the second tissue region being a region of a tissue included in the second region, in which the specifying unit includes an overlap processing unit configured to process the first tissue region and the second tissue region at least partially overlapping the first tissue region to set a third tissue region.

### BRIEF DESCRIPTION OF DRAWINGS

Fig. 1 is a diagram depicting an example of a configuration of a microscope system as an embodiment of a medical image analysis system of the present disclosure.
Fig. 2 is an explanatory diagram of an imaging method.
Fig. 3 is a block diagram of a medical image analysis device according to an embodiment of the present disclosure.
Fig. 4 is a diagram depicting an example of an image in which a processing target region is set in a pathological image.
Fig. 5 is a diagram depicting an example in which a processing target image is divided into a plurality of small regions, and a target region is set for each of the small regions.
Fig. 6 is a diagram depicting a margin region of the target region.
Fig. 7 is a diagram depicting an example where setting of the target region and processing of specifying a tissue region are repeatedly performed.
Fig. 8 is a diagram depicting an overlapping region in which two target regions overlap each other.
Fig. 9 is a diagram depicting an example where tissue regions overlap each other.
Fig. 10 is a diagram depicting an example where the overlap between tissues is eliminated to obtain a representative tissue.
Fig. 11 is a diagram depicting an example of a detection result image displayed by a detection result display unit.
Fig. 12 is a flowchart of an example of how the medical image analysis device operates according to the present embodiment.
Fig. 13 is a diagram depicting an example of overlap elimination processing.
Fig. 14 is a diagram depicting an example of the overlap elimination processing.
Fig. 15 is a diagram depicting a specific example of a modification example 2.
Fig. 16 is a diagram depicting a specific example of a modification example 3.

### MODE FOR CARRYING OUT THE INVENTION

Hereinafter, embodiments of the present disclosure will be described in detail with reference to the drawings. Note that, in the description and the drawings, components having substantially the same function or configuration are denoted by the same reference numerals, and redundant descriptions are omitted as needed.

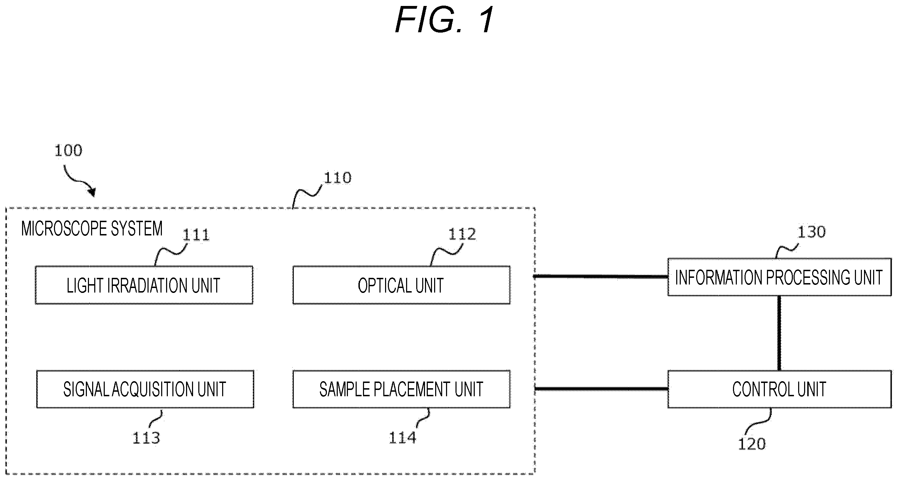

Fig. 1 is a diagram depicting an example of a configuration of a microscope system 100 as an embodiment of a medical image analysis system of the present disclosure.

The microscope system 100 depicted in Fig. 1 includes a microscope device 110, a control unit (control device) 120, and an information processing unit (information processing device) 130. The microscope device 110 includes a light irradiation unit 111, an optical unit 112, and a signal acquisition unit 113. The microscope device 110 may further include a sample placement unit 114 on which a biological sample S is placed. Note that the configuration of the microscope device 110 is not limited to that depicted in Fig. 1. For example, the light irradiation unit 111 may be located outside the microscope device 110, and for example, a light source not included in the microscope device 110 may be used as the light irradiation unit 111. Furthermore, the light irradiation unit 111 may be arranged such that the sample placement unit 114 is sandwiched between the light irradiation unit 111 and the optical unit 112, and may be arranged at a side where the optical unit 112 is located, for example. The microscope device 110 may be adapted to one or two or more of the followings: bright field observation; phase difference observation; differential interference observation; polarization observation; fluorescence observation; and dark field observation.

The microscope system 100 may be configured as a so-called whole slide imaging (WSI) system or a digital pathology system, and may be used for pathological diagnosis. Furthermore, the microscope system 100 may also be configured as a fluorescence imaging system, particularly a multiple fluorescence imaging system.

For example, the microscope system 100 may be used to perform intraoperative pathological diagnosis or telepathological diagnosis. In the intraoperative pathological diagnosis, during surgery, the microscope device 110 can acquire data of the biological sample S acquired from a subject of the surgery and then transmit the data to the information processing unit 130. In the telepathological diagnosis, the microscope device 110 can transmit the acquired data of the biological sample S to the information processing unit 130 located in a place away from the microscope device 110 (such as in another room or building). Then, in these diagnoses, the information processing unit 130 receives and outputs the data. A user of the information processing unit 130 can perform pathological diagnosis on the basis of the output data.

### (Biological Sample)

The biological sample S may be a sample containing a biological component. Examples of the biological component may include a tissue or a cell of a living body, a liquid component of a living body (blood, urine, and the like), a culture, or a living cell (a cardiomyocyte, a nerve cell, a fertilized egg, etc.).

The biological sample S may be a solid, a specimen fixed with a fixing reagent such as paraffin, or a solid formed by freezing. The biological sample S may be a section of the solid. Specific examples of the biological sample S include a section of a biopsy sample.

The biological sample S may be subjected to treatment such as staining or labeling. The treatment may be staining for showing a form of a biological component or showing a substance of the biological component (such as a surface antigen), and examples thereof include hematoxylin-eosin (HE) staining and immunohistochemistry staining. The biological sample S may be subjected to the treatment with one or two or more reagents, and the reagent may be a fluorescent dye, a coloring reagent, a fluorescent protein, or a fluorescently labeled antibody.

The specimen may be prepared from a specimen or a tissue sample collected from a human body for the purpose of pathological diagnosis or clinical examination. Furthermore, the specimen may be derived, not only from a human body, but also from an animal, a plant, or another material. The specimen may differ in property in a manner that depends on the type of the tissue being used (such as an organ or a cell, for example), the type of the disease being examined, the attributes of the subject (such as age, gender, blood type, and race, for example), or the subject's daily habits (such as an eating habit, an exercise habit, and a smoking habit, for example). The specimen may be managed with the specimen accompanied by identification information (bar code information, QR code (trademark) information, or the like) for identifying each specimen.

### (Light Irradiation Unit)

The light irradiation unit 111 includes a light source for illuminating the biological sample S and an optical unit that guides light emitted from the light source to a specimen. The light source can irradiate the biological sample with visible light, ultraviolet light, infrared light, or a combination thereof. The light source may be one or two or more of the followings: a halogen lamp; a laser light source; an LED lamp; a mercury lamp; and a xenon lamp. For the fluorescence observation, the light source may have a plurality of types and/or wavelengths, and the types and/or wavelengths may be appropriately selected by those skilled in the art. The light irradiation unit may have a transmissive, reflective, or epi-illumination (coaxial epi-illumination or side-illumination) configuration.

### (Optical Unit)

The optical unit 112 is configured to guide light from the biological sample S to the signal acquisition unit 113. The optical unit 112 may be configured to enable the microscope device 110 to observe or image the biological sample S.

The optical unit 112 may include an objective lens. A type of the objective lens may be appropriately selected by those skilled in the art in accordance with an observation method. Furthermore, the optical unit 112 may include a relay lens for relaying an image enlarged by the objective lens to the signal acquisition unit 113. The optical unit 112 may further include, in addition to the objective lens and the relay lens, other optical components such as an eyepiece lens, a phase plate, and a condenser lens.

Furthermore, the optical unit 112 may further include a wavelength separation unit configured to separate light having a predetermined wavelength from the light from the biological sample S. The wavelength separation unit may be configured to selectively allow light of a predetermined wavelength or wavelength range to reach the signal acquisition unit. The wavelength separation unit may include, for example, one or two or more of the followings: a filter that selectively transmits light; a polarizing plate; a prism (Wollaston prism); and a diffraction grating. The optical components included in the wavelength separation unit may be arranged, for example, on an optical path extending from the objective lens to the signal acquisition unit. The wavelength separation unit is provided in the microscope device in a case where fluorescence observation is performed, particularly in a case where an excitation light irradiation unit is included. The wavelength separation unit may be configured to separate fluorescence from each other or separate white light from fluorescence.

### (Signal Acquisition Unit)

The signal acquisition unit 113 may be configured to receive light from the biological sample S and convert the light into an electric signal, particularly a digital electric signal. The signal acquisition unit 113 may be configured to be able to acquire data regarding the biological sample S on the basis of the electric signal. The signal acquisition unit 113 may be configured to be able to acquire data of an image of the biological sample S (an image, particularly a still image, a time-lapse image, or a moving image), and may be particularly configured to acquire data of an image enlarged by the optical unit 112. The signal acquisition unit 113 includes an imaging device including one or a plurality of imaging elements, such as CMOSs or CCDs, each including a plurality of pixels arranged one-dimensionally or two-dimensionally. The signal acquisition unit 113 may include an imaging element for acquiring a low-resolution image and an imaging element for acquiring a high-resolution image, or may include an imaging element for sensing for AF or the like and an imaging element for outputting an image for observation or the like. The imaging element may include not only the plurality of pixels, but also a signal processing unit (including one, two, or three of the followings: a CPU, a DSP, and a memory) that performs signal processing using a pixel signal from each pixel, and an output control unit that controls output of image data generated from the pixel signals and processed data generated by the signal processing unit. Moreover, the imaging element may include an asynchronous event detection sensor that detects, as an event, that a luminance change of a pixel that photoelectrically converts incident light exceeds a predetermined threshold. The imaging element including the plurality of pixels, the signal processing unit, and the output control unit may be preferably configured as a one-chip semiconductor device.

### (Control Unit)

The control unit 120 controls imaging by the microscope device 110. The control unit 120 can adjust a positional relationship between the optical unit 112 and the sample placement unit by driving movement of the optical unit 112 and/or the sample placement unit 114 for imaging control. The control unit 120 can move the optical unit and/or the sample placement unit in a direction (for example, an optical axis direction of the objective lens) such that the optical unit and the sample placement unit are close to or away from each other. Furthermore, the control unit may move the optical unit and/or the sample placement unit in any direction in a plane perpendicular to the optical axis direction. The control unit may control the light irradiation unit 111 and/or the signal acquisition unit 113 for imaging control.

### (Sample Placement Unit)

The sample placement unit 114 may be configured to be able to fix a position of the biological sample S on the sample placement unit, and may be a so-called stage. The sample placement unit 114 may be configured to be able to move the position of the biological sample S in the optical axis direction of the objective lens and/or the direction perpendicular to the optical axis direction.

### (Information Processing Unit)

The information processing unit 130 can acquire data (such as imaging data) acquired by the microscope device 110 from the microscope device 110. The information processing unit 130 can perform image processing on the imaging data. The image processing may include color separation processing. The color separation processing may include processing of extracting data of a light component of a predetermined wavelength or wavelength range from the imaging data to generate image data, processing of removing data of a light component of a predetermined wavelength or wavelength range from the imaging data, or the like. Furthermore, the image processing may include autofluorescence separation processing of separating an autofluorescence component and a pigment composition of a tissue section, and fluorescence separation processing of separating wavelengths of pigments having different fluorescence wavelengths from each other. In the autofluorescence separation processing, processing of removing, using an autofluorescence signal extracted from one of the plurality of specimens having the same or similar properties, an autofluorescence component from image information regarding another specimen may be performed.

The information processing unit 130 may transmit data for imaging control to the control unit 120, and the control unit 120 that has received the data may control imaging by the microscope device 110 in accordance with the data.

The information processing unit 130 may be configured as an information processing device such as a general-purpose computer, and may include a CPU, a RAM, and a ROM. The information processing unit 130 may be included in a housing of the microscope device 110 or may be located outside the housing. Furthermore, various processing to be performed by or various functions of the information processing unit may be realized by a server computer or a cloud connected via a network.

A method of imaging the biological sample S by the microscope device 110 may be appropriately selected by those skilled in the art according to a type of the biological sample S, a purpose of imaging, and the like. An example of the imaging method will be described below.

One example of the imaging method is as follows. The microscope device 110 can first specify an imaging target region (processing target region). The imaging target region may be specified so as to cover an entire region where the biological sample S exists, or may be specified so as to cover a target portion (a portion where a target tissue section, a target cell, or a target lesion exists) of the biological sample S. Next, the microscope device 110 divides the imaging target region into a plurality of segment regions of a predetermined size, and the microscope device 110 sequentially images each of the segment regions. Therefore, an image of each segment region is acquired.

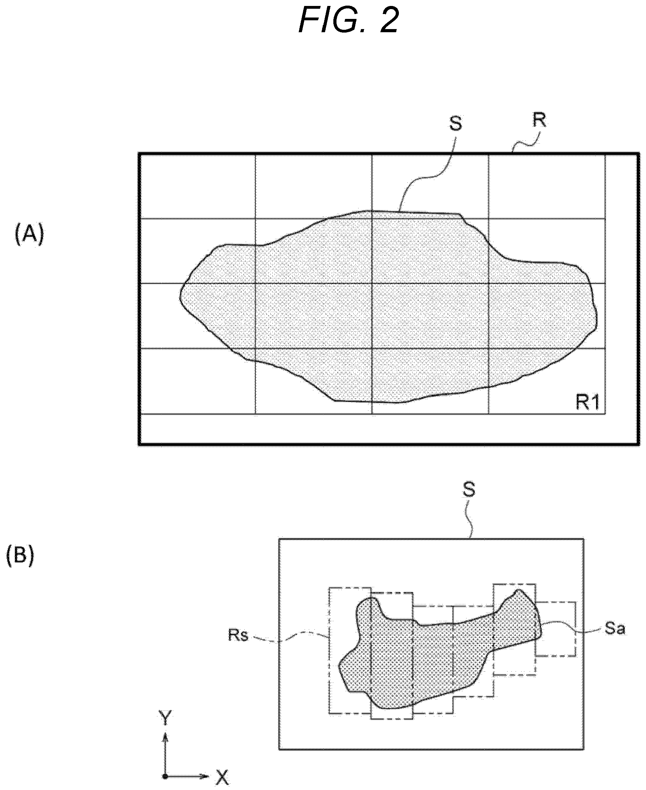

Fig. 2(A) is an explanatory diagram of an example of the imaging method. As depicted in Fig. 2(A), the microscope device 110 specifies an imaging target region R covering the entire biological sample S. Then, the microscope device 110 divides the imaging target region R into 16 segment regions. Then, the microscope device 110 images a segment region R1, and then can image any region of the regions included in the imaging target region R, such as a region adjacent to the segment region R1. Then, the segment regions are imaged until there is no segment region that has not been imaged. Note that a region other than the imaging target region R may also be imaged on the basis of captured image information regarding the segment regions.

In order to image, after imaging a certain segment region, the next segment region, a positional relationship between the microscope device 110 and the sample placement unit is adjusted. The adjustment may be performed by movement of the microscope device 110, movement of the sample placement unit 114, or both thereof. In this example, the imaging device that images each segment region may be a two-dimensional imaging element (an area sensor) or a one-dimensional imaging element (a line sensor). The signal acquisition unit 113 may image each segment region via the optical unit. Furthermore, the imaging of each segment region may be continuously performed while moving the microscope device 110 and/or the sample placement unit 114, or the movement of the microscope device 110 and/or the sample placement unit 114 may be stopped at the time of imaging each segment region. The imaging target region may be divided such that the segment regions partially overlap each other, or the imaging target region may be divided such that the segment regions do not overlap each other. Each segment region may be imaged a plurality of times while changing imaging conditions such as a focal length and/or an exposure time.

Furthermore, the information processing unit 130 can combine a plurality of adjacent segment regions to generate image data of a wider region. Performing the combining processing over the entire imaging target region allows an image of a wider region to be acquired for the imaging target region. Furthermore, image data with lower resolution can be generated from the image of the segment region or the image subjected to the combining processing.

Another example of the imaging method is as follows. The microscope device 110 can first specify an imaging target region. The imaging target region may be specified so as to cover an entire region where the biological sample S exists, or may be specified so as to cover a target portion (a portion where a target tissue section or a target cell exists) of the biological sample S. Next, the microscope device 110 scans a partial region (also referred to as a "segment region" or a "segment scan region") of the imaging target region in one direction (also referred to as a "scan direction") in a plane perpendicular to the optical axis to image the partial region. When the scan of the segment region is completed, next, a segment region adjacent to the segment region is scanned. These scan operations are repeated until the entire imaging target region is imaged.

Fig. 2(B) is an explanatory diagram of another example of the imaging method. As depicted in Fig. 2(B), the microscope device 110 specifies, as an imaging target region Sa, a region where a tissue section exists (a gray portion) in the biological sample S. Then, the microscope device 110 scans a segment region Rs in a Y-axis direction in the imaging target region Sa. After scanning the segment region Rs, the microscope device next scans a segment region adjacent to the segment region Rs in an X-axis direction. This operation is repeated until the scan of the entire imaging target region Sa is completed.

The positional relationship between the microscope device 110 and the sample placement unit 114 is adjusted for scanning each segment region and for, after imaging a certain segment region, imaging the next segment region. The adjustment may be performed by movement of the microscope device 110, movement of the sample placement unit, or both thereof. In this example, the imaging device that images each segment region may be a one-dimensional imaging element (a line sensor) or a two-dimensional imaging element (an area sensor). The signal acquisition unit 113 may image each segment region via a magnifying optical system. Furthermore, the imaging of each segment region may be continuously performed while moving the microscope device 110 and/or the sample placement unit 114. The imaging target region may be divided such that the segment regions partially overlap each other, or the imaging target region may be divided such that the segment regions do not overlap each other. Each segment region may be imaged a plurality of times while changing imaging conditions such as a focal length and/or an exposure time.

Furthermore, the information processing unit 130 can combine a plurality of adjacent segment regions to generate image data of a wider region. Performing the combining processing over the entire imaging target region allows an image of a wider region to be acquired for the imaging target region. Furthermore, image data with lower resolution can be generated from the image of the segment region or the image subjected to the combining processing.

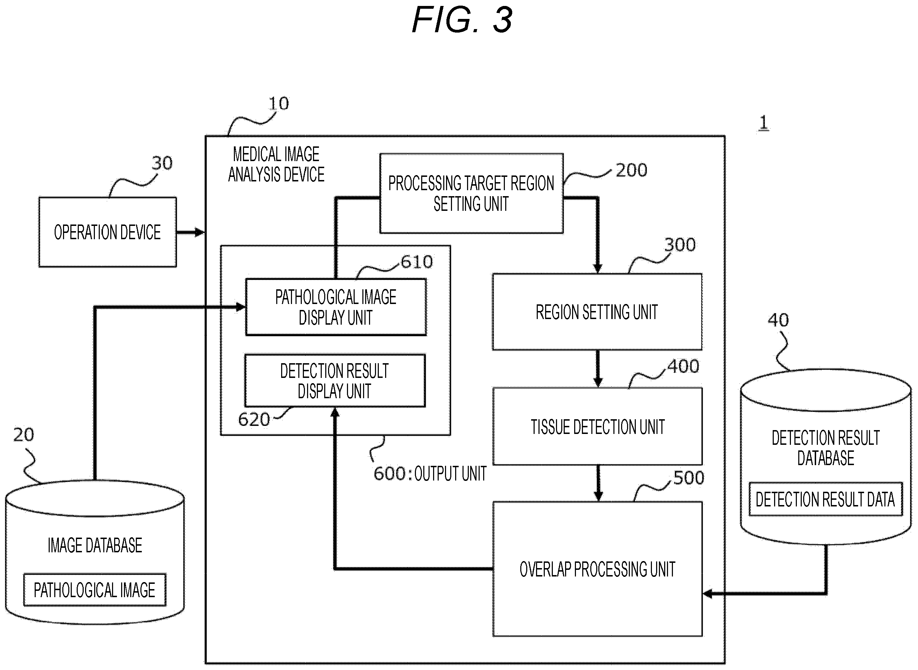

Fig. 3 is a block diagram of a medical image analysis device 10 according to the embodiment of the present disclosure. The medical image analysis device 10 corresponds to one aspect of the information processing unit 130 in Fig. 1, and is connectable to the microscope device 110 and the control unit 120. The medical image analysis device 10 may be operated by a computer (including, for example, a processor such as a central processing unit (CPU)). In this case, the operation of the present embodiment is realized by reading a program from a storage unit that stores the program and executing the program on the CPU or the information processing unit 130. The storage unit may include a memory such as a RAM or a ROM, a magnetic recording medium, or an optical recording medium.

A medical image analysis system 1 includes the medical image analysis device 10, an image database (DB) 20, an operation device 30, and a detection result database (DB) 40. The medical image analysis device 10 includes a processing target region setting unit 200, a region setting unit 300, a tissue detection unit 400, an overlap processing unit 500, and an output unit 600. The output unit 600 includes a pathological image display unit 610 and a detection result display unit 620. The output unit 600 is an example of a display unit that displays an image or text. A specifying unit according to the present embodiment includes the tissue detection unit 400 and the overlap processing unit 500.

The medical image analysis device 10 runs an analysis application (hereinafter, may be referred to as the present application) to be used by a user of the medical image analysis device 10. The user of the medical image analysis device 10 is a doctor such as a pathologist, but the user is not limited to such a doctor, and may be, for example, a person engaged in a doctor.

The output unit 600 displays data read by the present application and data generated by the present application on a display (for example, a liquid crystal display device, an organic EL display device, or the like). The data contains image data, text data, and the like. In the present embodiment, the display is included in the output unit 600, but the display may be connected to the medical image analysis device 10 from the outside in a wired or wireless manner. In this case, the output unit 600 is capable of performing wired or wireless communication, and it is only required that the output unit 600 transmit display data to the display.

The medical image analysis device 10 is connected to the image database 20 (image DB 20) and the detection result database 40 (search result DB 40) in a wired or wireless manner. The medical image analysis device 10 can read or acquire information from the image DB 20 and the detection result DB 40. Furthermore, the medical image analysis device 10 can write or transmit information to the image DB 20 and the detection result DB 40. The image DB 20 and the detection result DB 40 may be integrated into a single DB.

The medical image analysis device 10 may be connected to the image DB 20 and the detection result DB 40 over a communication network such as the Internet or an intranet, or may be connected over a cable such as a USB cable. Alternatively, the image DB 20 and the search result DB 40 may be included inside the medical image analysis device 10 as a part of the medical image analysis device 10.

The medical image analysis device 10 is connected to the operation device 30 in a wired or wireless manner. The operation device 30 is operated by the user of the medical image analysis device 10. The user inputs, as input information, various instructions to the medical image analysis device 10 using the operation device 30. The operation device 30 may be any device such as a keyboard, a mouse, a touch panel, a voice input device, or a gesture input device.

The image DB 20 stores pathological images of one or more subjects. The pathological image is stored as, for example, a WSI file. The pathological image is an image obtained by imaging a sample (biological sample S) collected from a subject. The image DB 20 may store, in addition to the pathological image, information regarding a case the subject suffers, such as clinical information of the subject. The image DB 20 is created on, for example, a memory device, a hard disk, an optical recording medium, a magnetic recording medium, or the like. The pathological image is acquired by imaging the biological sample S by the signal acquisition unit 113 described above.

The method of imaging the biological sample S may be any method such as the method described with reference to Fig. 2(A) or Fig. 2(B). That is, it is assumed that the imaging target region for the biological sample S is divided into a plurality of regions (unit regions or segment regions), and the unit regions are sequentially imaged while adjusting the positional relationship between the microscope device 110 and the sample placement unit 114 until all the unit regions are imaged. The image DB 20 stores an image (unit image) of each unit region, and a set of a plurality of unit images corresponds to the pathological image (entire image). The unit image may be compressed in accordance with any compression method. The compression method may differ in a manner that depends on each unit image.

### (Pathological Image Display Unit 610)

The pathological image display unit 610 displays, on a screen of the present application, a part or all of the pathological image specified, via the operation device 30, by the user who uses the present application. The screen displaying a part or all of the pathological image is referred to as a pathological image viewing screen. The medical image analysis device 10 reads, from a diagnosis DB 40, the pathological image specified by the user and displays the same on the pathological image viewing screen in a window of the present application. For example, the WSI file is read and decoded to develop the pathological image, and the pathological image is displayed on the pathological image viewing screen. The user may be able to change a magnification of the pathological image while viewing the pathological image. In this case, an image having a magnification specified by the user may be read from the diagnosis DB 40 and displayed again.

### (Processing Target Region Setting Unit 200)

The processing target region setting unit 200 sets a region to be processed (processing target region) in the pathological image displayed on the pathological image viewing screen. The processing target region setting unit 200 may set the processing target region on the basis of instruction information from the user. For example, a region circumscribed by a rectangle or the like set by user's mouse operation or the like may be set as the processing target region. Alternatively, a predetermined range (for example, a certain range from the center of the display region or the entire display region) in the pathological image viewing screen may be set as the processing target region. For example, in a case where there is no user operation for a certain period of time after the pathological image is displayed, the predetermined range may be automatically set as the processing target region. The entire pathological image read from the image DB 20 may be set as the processing target region.

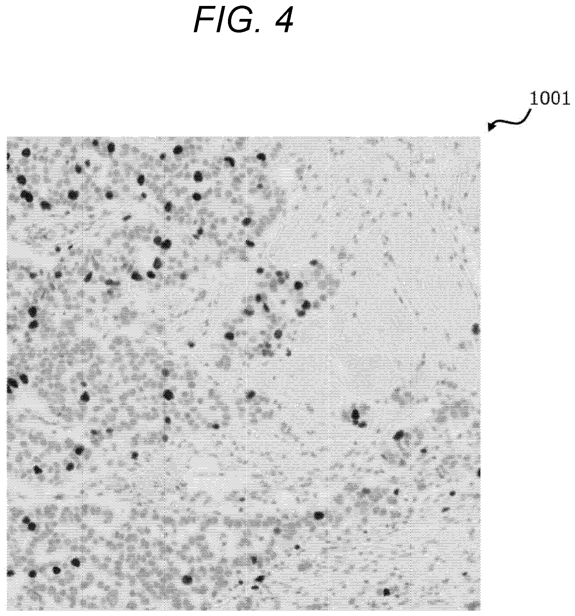

Fig. 4 depicts an example of an image (referred to as a processing target image) in which the processing target region is set in the pathological image. A processing target image 1001 is a part or all of the pathological image read from the image DB 20. The processing target image 1001 includes a large number of various types of tissues (microtissues such as cells).

The region setting unit 300 sets a region (target region) to be subjected to tissue detection processing in the processing target image 1001. The processing target image is usually large in data size, and processing all the processing target image at a time requires a large amount of memory and is thus not realistic. Therefore, the processing target image is divided into a plurality of regions (referred to as small regions), and the tissue detection processing is performed on each small region.

The region setting unit 300 sequentially selects each small region and sets the target region for the selected small region. The target region is a region including the entire small region and a region around the small region (referred to as a margin region) having a uniform width. Therefore, the margin region includes a part of a small region adjacent to the selected small region. The width of the margin region is at least equal to or larger than a size of a tissue to be detected. It is therefore possible to accurately detect information regarding a tissue (for example, a region or shape of the tissue) located at a boundary of the small region.

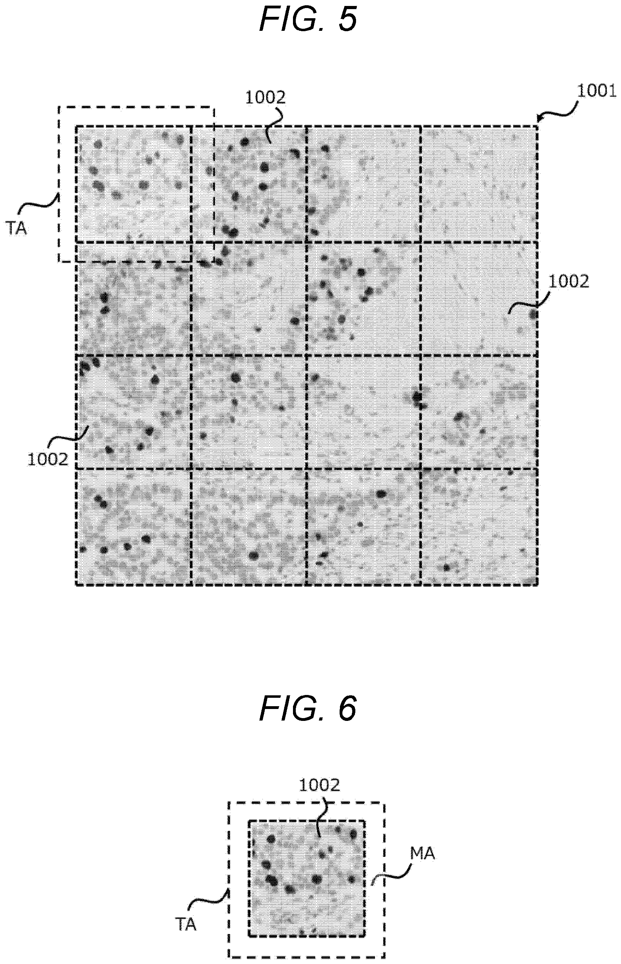

Fig. 5 depicts an example where the processing target image 1001 is divided into a plurality of small regions 1002, and a target region TA is set for a first region (leftmost small region in the first row) of the plurality of small regions. The target region TA includes the first small region 1002 and a margin region surrounding the small region 1002. This margin region includes parts of three small regions: a region adjacent to the right side of the first small region 1002; a region adjacent to the left side of the first small region 1002; and a region adjacent to the lower-right side of the first small region 1002.

Fig. 6 is a diagram depicting the margin region in detail. The target region TA covers the small region 1002. A region outside the small region 1002 in the target region TA is a margin region MA.

The tissue detection unit 400 performs the tissue detection processing on an image included in the target region TA. The image of the target region TA includes an image of the small region 1002 for which the target region TA is set and an image portion of the peripheral small region 1002 included in the margin region MA of the target region TA. The tissue detection processing can be performed using a model such as a learned neural network that receives input of an image and outputs information such as a tissue region included in the image. Specifically, a method using the U-Net architecture or the like is available. Alternatively, a method using a classical WaterShed, region growing, or the like may be used. Alternatively, a method using a general image segmentation technique may be used.

The tissue detection unit 400 may delete a tissue present only in the margin region MA (tissue not extending over the boundary between the small regions 1002) at this time point. This tissue is detected from an adjacent small region, so that it is possible to reduce, by deleting the tissue at this time point, processing to be performed by the overlap processing unit 500 to be described later.

The tissue detection unit 400 temporarily stores information regarding the detected tissue in a storage unit such as a memory with the information regarding the detected tissue and information regarding the target region TA associated with each other. The information regarding the target region TA may be, for example, position information regarding the target region TA, or position information or identification information regarding the small region for which the target region TA is set. The information regarding the detected tissue includes information such as a region, a position, a shape, and a type of the detected tissue.

The tissue detection unit 400 performs the tissue detection processing every time the region setting unit 300 sets the target region TA for each small region. As described above, the setting of the target region TA by the region setting unit 300 and the tissue detection processing by the tissue detection unit 400 are repeatedly performed.

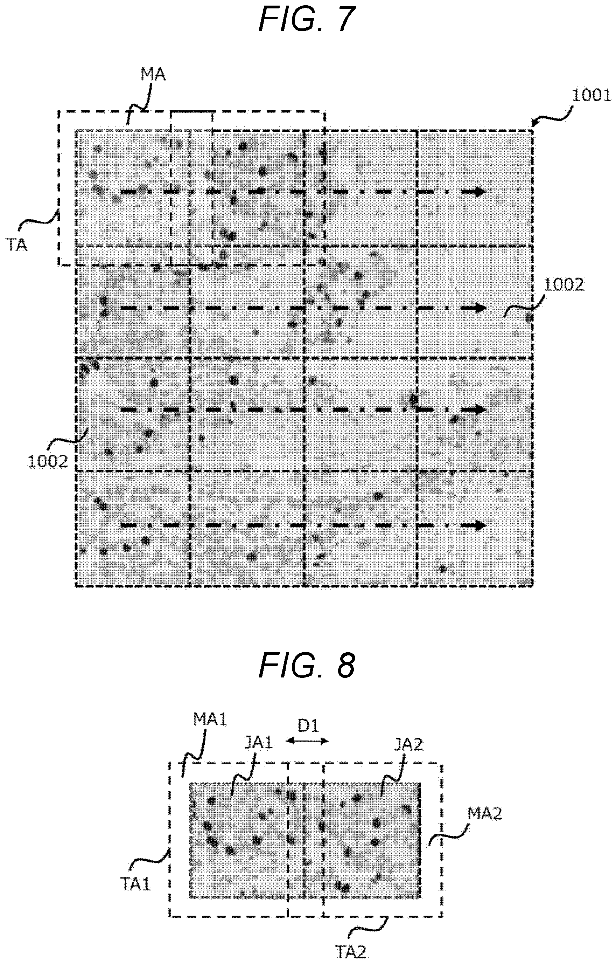

Fig. 7 depicts an example where the setting of the target region TA by the region setting unit 300 and the tissue detection processing by the tissue detection unit 400 are repeatedly performed. An example of the order of the setting the target region TA will be described. After the target region TA is first set for the leftmost small region 1002 in the first row of the processing target image 1001, next, a small region 1002 adjacent to the right side of the leftmost small region 1002 is selected, and the target region TA is set. When the target region TA is set for the rightmost small region 1002 in the first row, the processing proceeds to the second row and sets the target region TA for the first small region 1002 in the second row. Subsequently, each right small region 1002 is sequentially selected, and the target region TA is set. Thereafter, the processing is repeated in a similar manner until the target region TA is finally set for the rightmost small region 1002 in the last row.

The target region TA set by the region setting unit 300 partially overlaps the target region TA set for an adjacent small region. That is, a margin region MA (denoted as MA1) of a target region TA (denoted as TA1) set for a certain small region (denoted as a small region JA1) includes a part of an adjacent small region (small region JA2) by the width of the margin region MA from the boundary between the small region JA and the small region JA2. Similarly, a margin region MA (denoted as MA2) of a target region TA2 set for the adjacent small region JA2 includes a part of the small region JA1 by the width of the margin region MA2 from the boundary between the small region JA2 and the small region JA1. Therefore, in the tissue detection processing on the target region TA1 and the tissue detection processing on the target region TA2, a tissue may be redundantly detected in a region where the target regions TA1 and TA2 overlap each other. That is, regions of the detected tissue may overlap each other.

Fig. 8 is a diagram depicting a region where the target region TA1 set for the small region JA1 and the target region TA2 set for the small region JA2 overlap each other. In the overlapping regions D1, since the detection processing is redundantly performed on the target region TA1 and the target region TA2, a tissue may also be redundantly detected. Note that, even for the same tissue, the region of the tissue detected from the target region TA1 and the region of the tissue detected from the target region TA2 do not necessarily coincide with each other in a manner that depends on characteristics, accuracy, or the like of a detection algorithm. Differences may arise in the position, shape, region, and the like of the detected tissue. The detection processing need not be performed on a region (invalid region) of the target region TA1 that is located outside an image, or the detection processing may be performed with a predetermined pixel value indicating invalidity set for the invalid region.

As an example, the target region TA1 corresponds to a first region, and the target region TA2 corresponds to the first region. The region of the tissue detected from the target region TA1 corresponds to a first tissue region, and the region of the tissue detected from the target region TA2 corresponds to a second tissue region. In a case where the first tissue region and the second tissue region overlap each other, a third tissue is set as a result of eliminating the overlap to be described later between the first tissue region and the second tissue region.

The description with reference to Figs. 7 and 8 has been given with the small region JA1 and the small region JA2 located on the right side of the small region JA1 used as an example, but the processing is performed in a similar manner on the small region JA1 and a small region adjacent to the lower side of the small region JA1, and the small region JA1 and a small region adjacent to the lower-right side of the small region JA1. Furthermore, the processing may be performed in a similar manner on small regions close to the center, the small regions including a total of eight small regions: an upper region; a lower region; a left region; a right region; an upper right region; a lower right region; an upper left region; and a lower left region.

The overlap processing unit 500 specifies the regions of the tissue redundantly detected between the target regions set for the small regions adjacent to each other. The overlap processing unit 500 performs processing of eliminating or removing the overlap between the regions of the tissue, and sets a tissue region representing the overlapping regions of the tissue. That is, the first tissue region and the second tissue region at least partially overlapping each other are processed to set a third tissue region (representative tissue region) representing the first tissue region and the second tissue region. The number of overlapping tissue regions is two or more. The overlap also has various forms such as a form in which two or more tissue regions overlap one tissue region, and a form in which three or more tissue regions are chained together. Note that, for the overlap, a case where the boundaries of tissue regions are in contact with each other may be defined that the tissue regions do not overlap each other or may be defined that the tissue regions overlap each other.

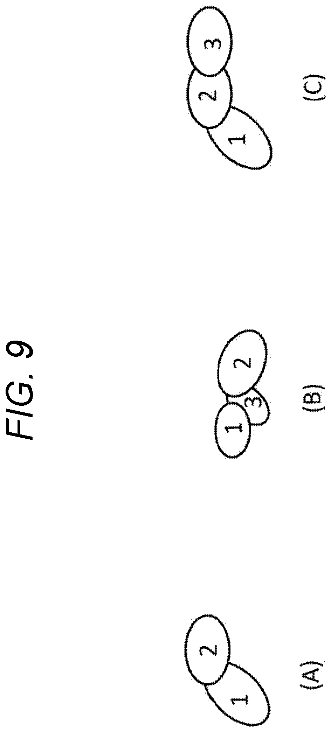

Figs. 9(A) to 9(C) are diagrams depicting examples where tissue regions overlap each other. In Fig. 9(A), two tissue regions (tissue regions 1 and 2) overlap each other. In Fig. 9(B), two tissue regions (tissue regions 1 and 2) overlap one tissue region (tissue region 3). In Fig. 9(C), three tissue regions (tissue regions 1, 2, and 3) overlap each other in a chain manner. Overlap forms other than those depicted in Fig. 9 are also possible.

For example, as the processing of eliminating the overlap between tissue regions, the overlap processing unit 500 may select any one of the tissue regions as the representative tissue. For example, the largest or smallest tissue region is selected, and the selected tissue region is set as the representative tissue region. A tissue region having an intermediate size may be the representative tissue region.

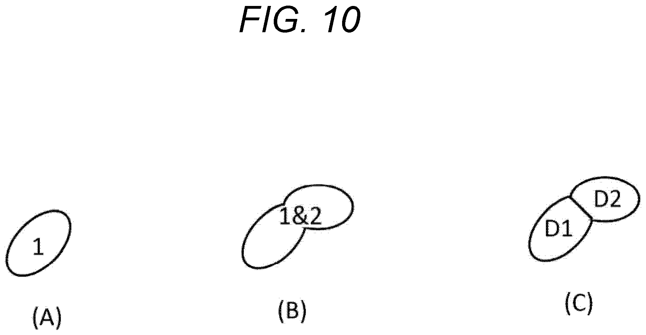

Fig. 10(A) depicts an example where the larger tissue region 1 of the overlapping tissue regions 1 and 2 in Fig. 9(A) is selected as the representative tissue region.

Furthermore, the overlapping tissue regions may be integrated together, and the integrated region may be set as the representative tissue region. In the integration, for example, a region (integrated region) obtained by taking the logical OR of overlapping tissue regions may be set as the representative tissue region.

In Fig. 10(B), the overlapping tissue regions 1 and 2 in Fig. 9(A) are integrated together, and the integrated tissue region (tissue regions 1 and 2) is set as the representative tissue region.

Furthermore, the overlapping tissue regions may be divided into a plurality of regions, and each segment region may be set as the representative tissue region. For example, the overlapping tissue regions may be integrated together, and the integrated tissue region may be divided into a plurality of regions. Specifically, for example, a ratio of areas of the overlapping tissue regions in the integrated region is calculated, and if the ratio is less than a threshold, the integrated region is divided into regions, and each segment region is set as the representative tissue region. On the other hand, if the ratio is equal to or greater than the threshold, the integrated region may be set as the representative region. This method is based on an idea that, in a case where the ratio is low, the tissue regions do not originally overlap each other, but the tissue is redundantly detected in a manner that depends on the accuracy of the tissue detection algorithm.

Fig. 10(C) depicts an example where the overlapping tissue regions 1 and 2 in Fig. 9(A) are integrated together (see Fig. 10(B)), and the integrated tissue region is divided into two. Each of the segment regions D1 and D2 is set as the representative tissue.

The overlap processing unit 500 generates, after performing the processing of eliminating the overlap between all overlapping (adjacent) tissue regions, detection result data from the result of detecting the tissue region for each target region and the result of the processing of eliminating the overlap between the tissue regions (the representative tissue region set instead of the overlapping tissue regions).

The detection result data includes, for example, information regarding a tissue region determined not to overlap among tissue regions specified in each target region, and includes information regarding a representative tissue region generated in the overlap elimination processing. The information regarding the tissue region (including the representative tissue region) includes the type, shape, position, size, and other features (density of tissues, positional relationship of tissues for each tissue type, and the like) of tissues in the tissue region.

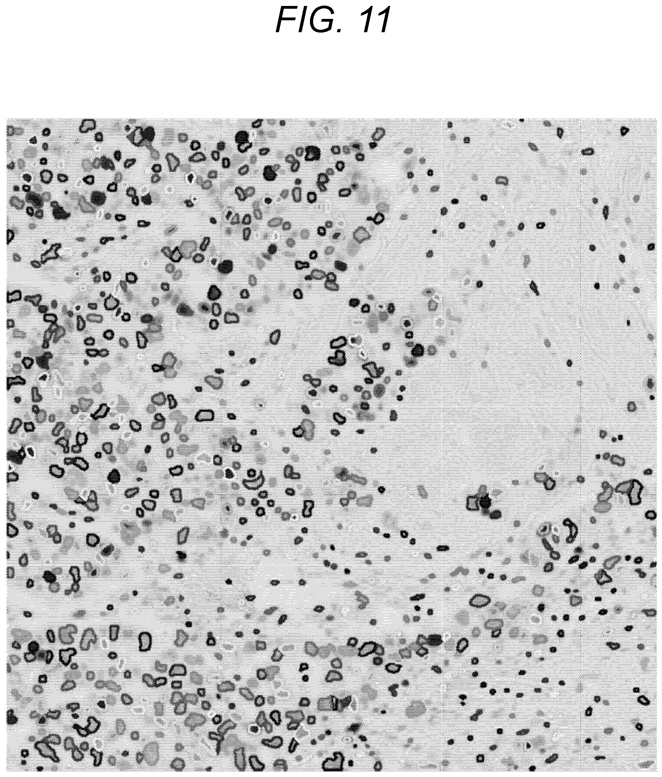

The detection result data may include an image (detection result image) including each specified tissue region (including the representative tissue region). That is, the detection result image is an image in which each tissue region is arranged (see Fig. 11 to be described later).

Furthermore, the detection result data may be data in which information regarding a tissue detected in from each small region (for example, region information regarding the tissue) is associated with an image of each small region. Alternatively, in a case where the small region includes a plurality of unit regions, the detection result data may be data in which information regarding a tissue detected from each unit region (for example, region information regarding the tissue) is associated with an image (unit image) of the unit region.

As an example, the detection result data may include first data in which region information regarding a tissue detected from a first small region (or first unit region) is associated with an image of the first small region (or an image of the first unit region). Furthermore, the detection result data may include second data in which region information regarding a tissue detected from a second small region (or second unit region) is associated with an image of the second small region (or an image of the second unit region). Furthermore, the detection result data may include third data in which information regarding a tissue in the representative tissue region is associated with at least one of the image of the first small region (or the image of the first unit region) or the image of the second small region (or the image of the second unit region adjacent to the first unit region). The information regarding the tissue in the representative tissue region may be determined on the basis of information regarding tissues serving as a generation source. For example, as the type of the tissue in the representative tissue region, one type of the tissues serving as the generation source may be used. For example, of types of the tissues serving as the generation source, a type having the largest number of tissues may be set as a type of the tissue in the representative tissue region.

In a case where a region such as the representative tissue region extends over two small regions (or unit regions, the same applies hereinafter in this paragraph), the tissue in the region may be associated with each of the two small regions. For example, the region information regarding the tissue is divided into two and associated with each of the two small regions. In a case where a position (for example, centroid) of the tissue extending over the boundary of the small region is associated with the small regions, it may be determined to which small region the tissue (including the representative region) extending over the boundary between the small regions belongs, and it may be determined that the tissue is included in the determined small region. For example, a ratio between areas of the region of the tissue belonging to the two small regions may be calculated, and the tissue may belong to the small region having a larger ratio. Alternatively, a centroid of the region of the tissue (for example, a mean of coordinates included in the representative region) may be calculated to determine that the tissue is included in the small region to which the centroid belongs. The small region to which the tissue belongs may be determined by another method.

The detection result DB 40 stores the detection result data generated by the overlap processing unit 500. The detection result DB 40 may associate the detection result data with information regarding the subject from which the biological sample S is collected. The detection result DB 40 is created on, for example, a memory device, a hard disk, an optical recording medium, a magnetic recording medium, or the like.

The detection result display unit 620 displays the detection result data generated by the overlap processing unit 500.

Fig. 11 depicts an example of the detection result image displayed by the detection result display unit 620. The detection result image in Fig. 11 is obtained as a result of the processing of the present embodiment performed on the image of the processing target region in Fig. 4. A large number of tissues have been detected, and a tissue present at the boundary of the small region can also be detected with a correct shape (for example, without making one tissue region discontinuous at the boundary between the small regions).

Lines indicating the small regions may be superimposed and displayed on the detection result image displayed by the detection result display unit 620 on the basis of the instruction information from the user. Furthermore, data indicating statistical information and analysis result for each tissue type may be displayed. Furthermore, tissues may be displayed with different line types, different colors, or the like for each tissue type. In the example in Fig. 11, tissues are displayed with different colors or different luminance for each tissue type.

The detection result image may be displayed with the detection result image superimposed on the processing target image (see Fig. 4). The detection result image may be displayed with the detection result image superimposed only on a small region (or unit region) in the processing target image specified by the user. In a case where the user changes the display magnification of the processing target image, the magnification of the detection result screen may also be changed. At this time, as described above, with information (region information or the like) regarding the tissue stored with the information associated with each small region (or each unit region), even in a case where the processing target image is partially displayed, it is only required that the region information regarding the tissue be read only for the displayed portion. It is therefore possible to perform, at high speed, processing of displaying the region information regarding the tissue with the region information regarding the tissue superimposed on the displayed portion of the processing target image.

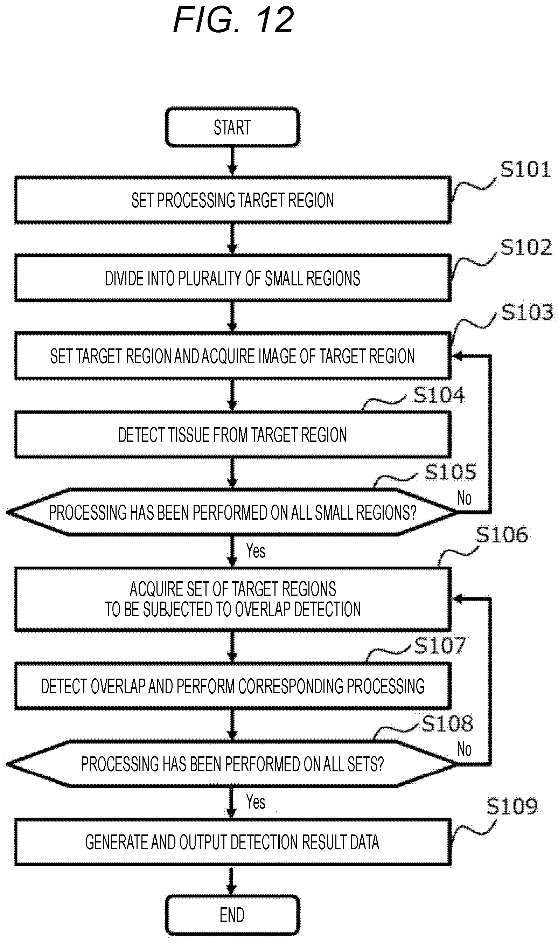

Fig. 12 is a flowchart of an example of how the medical image analysis devices 10 operates according to the present embodiment.

The pathological image display unit 610 reads the pathological image selected by the user from the image DB 20, and decodes and displays the same on the screen of the application (pathological image viewing screen) (S101). The processing target region setting unit 200 sets the processing target region in the pathological image displayed on the pathological image viewing screen (S101).

The region setting unit 300 divides the processing target region into a plurality of regions (small regions) (S102).

The region setting unit 300 selects a small region and sets a target region for the selected small region (S103). The target region includes the entire small region and a region (margin region) having a uniform width around the small region. The margin has a width larger than at least the size of a tissue to be detected. The region setting unit 300 acquires an image of the set target region (S103).

The tissue detection unit 400 performs processing of detecting the tissue from the image of the target region and specifies a region of the detected tissue (S104).

Steps S103 and S104 are repeatedly performed until the target region is set for all the small regions, and the tissue detection processing is performed on all the small regions (NO in S105).

When the target region has been set for all the small regions, and the tissue detection processing has been performed on all the small regions (YES in S105), the overlap processing unit 500 selects a set of target regions overlapping each other (S106). The overlap processing unit 500 performs overlap detection processing on the selected set (S107). Specifically, the overlap processing unit 500 detects a group of tissue regions at least partially overlapping each other in a region where the target regions overlap each other. Then, the overlap processing unit 500 performs processing of eliminating the overlap from the detected group of tissue regions (overlap elimination processing) (S107). Specifically, the detected group of tissue regions is processed to set a representative tissue region representing the group of tissue regions. In the overlap elimination processing, for example, the largest or smallest tissue region in the detected group of tissue regions is set as the representative tissue region. Alternatively, an integrated tissue obtained by integrating the group of tissue regions is set as the representative tissue region. Alternatively, the integrated tissue region is divided into a plurality of regions, and each segment region is set as the representative tissue region.

The overlap processing unit 500 selects all sets of target regions partially overlapping each other, and repeats steps S106 and S107 until the overlap detection processing and the overlap elimination processing are performed on all the sets of target regions (NO in S108).

When the overlap detection processing and the overlap elimination processing have been performed on all the sets, the overlap processing unit 500 generates detection result data on the basis of information regarding a tissue detected from the image of each target region (region information and the like) and information regarding the representative tissue generated in the overlap elimination processing (S109). For example, an image showing a tissue region determined not to overlap among tissue regions specified from each target region and showing a representative tissue region set in the overlap elimination processing (representative tissue region is arranged instead of the tissue region determined to overlap) is generated as the detection result image. The overlap processing unit 500 stores the detection result data in the detection result DB 40 (S109). Furthermore, the overlap processing unit 500 displays the detection result data on the detection result display unit 620 (S109).

In the description of the processing of this flowchart, the processing (S106) of detecting the overlap between tissue regions is performed after the target region is set for all the small regions, and the detection of a tissue from the target region is performed, but the detection of a tissue from the target region, and the processing of detecting the overlap between the target regions and eliminating the overlap may be performed concurrently. For example, the detection of the overlap between the tissue regions is performed at the time when the target region is set for a small region adjacent to a certain small region, and the detection of a tissue from the small region is performed, and, at the same time, processing on the next small region (processing of setting the target region and detecting a tissue) may be performed concurrently. In a case where the processing of setting the target region and detecting a tissue is performed by machine learning or the like using a graphical processing unit (GPU), and the processing of detecting and eliminating the overlap is performed by a central processing unit (CPU), resources can be effectively used.

As described above, according to the present embodiment, the processing target region is divided into a plurality of small regions each serving as a tissue detection target unit, the target region including the margin region surrounding each small region is set for each small region, and the processing of detecting a tissue is performed on each target region. It is therefore possible to specify a region of a tissue located at the boundary of the small region with high accuracy. Although there is a possibility that a tissue region is redundantly detected in a region where target regions overlap each other, the problem that the tissue region is redundantly detected can also be solved by performing processing of eliminating the overlap (for example, a tissue region representing a group of tissue regions overlapping each other is arranged instead of the group of tissue regions).

### (Modification Example 1)

In a modification example 1, a method by which the overlap processing unit 500 simply performs processing of determining whether or not tissue regions overlap each other will be described. This method allows a reduction in computational complexity of the processing of determining the overlap and thus allows an increase in throughput. Hereinafter, a description will be given using a specific example.

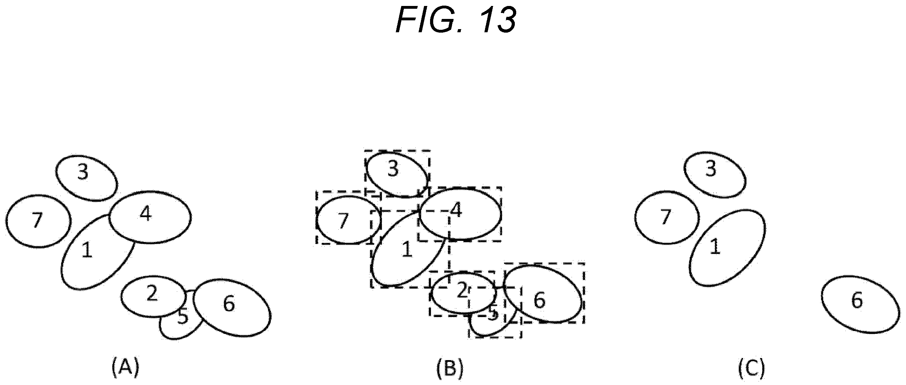

Fig. 13(A) depicts regions of tissues (tissue regions) 1 to 7 detected, by the overlap processing unit 500, from a region where two target regions overlap each other.

The overlap processing unit 500 calculates a circumscribed shape of each of the tissue regions 1 to 7. The circumscribed shape can be any desired shape such as a rectangle or a circle. Here, a circumscribed rectangle will be given as an example, but the shape is not limited to the rectangle.

In Fig. 13(B), a circumscribed rectangle calculated as the circumscribed shape of each of the tissue regions 1 to 7 is indicated by a dashed line.

The overlap processing unit 500 determines whether or not the circumscribed rectangles of the tissue regions 1 to 7 overlap each other (rough determination). The rough determination can be performed by determining whether or not the circumscribed rectangles includes the same coordinates. Since the object to be calculated is a rectangle, it is possible to make the determination at high speed with less computational complexity.

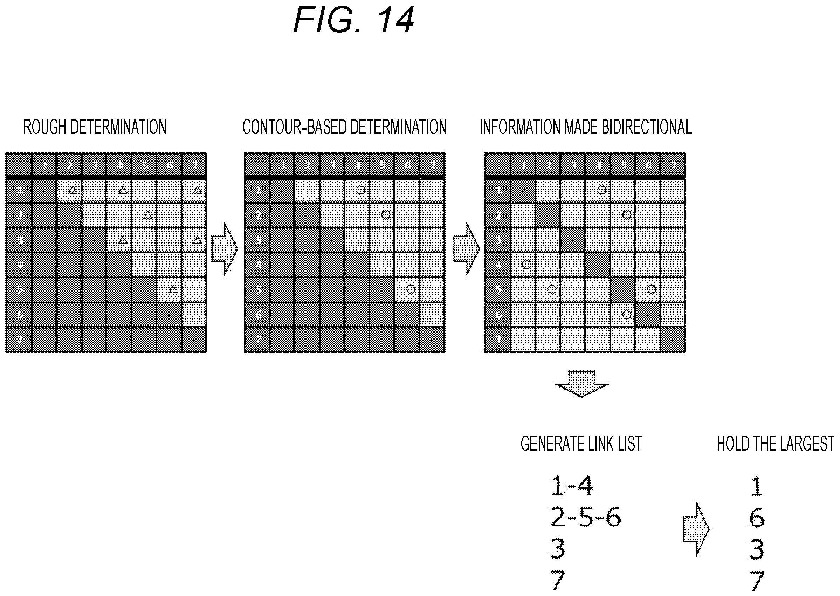

An upper-left table in Fig. 14 is a table showing a result of the rough determination. Triangular marks are stored between tissue regions having their respective circumscribed rectangles overlapping each other. The circumscribed rectangle of the tissue region 1 overlaps the circumscribed rectangles of the tissue regions 2, 4, and 7. The circumscribed rectangle of the tissue region 2 overlaps the circumscribed rectangle of the tissue region 5. The circumscribed rectangle of the tissue region 3 overlaps the circumscribed rectangles of the tissue regions 4 and 7. The circumscribed rectangle of the tissue region 5 overlaps the circumscribed rectangle of the tissue region 6.

In this example, the processing is sequentially performed in the order of the tissue regions 1 to 7, and the same set of tissue regions is not redundantly detected. For example, since the tissue region 2 has already been detected in the processing on the tissue region 1, the tissue region 1 is not detected in the processing on the tissue region 2. That is, the lower left side of the table is made void. It is therefore possible to eliminate the need of bidirectional computation and reduce computational complexity.

The overlap processing unit 500 performs, on the group of tissues determined to overlap each other by the rough determination, a determination on the basis of contours of the tissues (boundaries) (contour-based determination). That is, on the basis of whether or not tissues belonging to the group of tissues include the same coordinates, it is determined whether or not the tissues overlap each other.

The second table from the upper left of Fig. 14 shows a result of the contour-based determination. Circular marks are stored between tissues overlapping each other. The tissue region 1 overlaps the tissue region 4, but overlaps neither the tissue region 2 nor the tissue region 7. The tissue region 2 overlaps the tissue region 5. The tissue region 3 overlaps neither the tissue region 4 nor the tissue region 7. The tissue region 5 overlaps the tissue region 6.

The third table from the upper left of Fig. 14 is a table in which the lower left side of the table showing the result of the contour-based determination is made valid (bidirectional information).

The overlap processing unit 500 specifies a group of tissue regions overlapping each other from the bidirectional information in Fig. 14. In this example, four groups of tissue regions are specified. That is, a group of the tissue regions 1 and 4, a group of the tissue regions 2, 5, and 6, a group including only the tissue region 3, and a group including only the tissue region 7 are specified. As an example, as shown at the lower left of Fig. 14, a link list of the tissue regions 1 and 4, a link list of the tissue regions 2, 5, and 6, a link list including only the tissue region 3, and a link list including only the tissue region 7 may be generated.

The overlap processing unit 500 sets the representative tissue region from each group (or each link list) by the method described in the above-described embodiment.

In this example, as shown at the lower right of Fig. 14, a tissue region having the largest size in each group is set as the representative tissue region. In the group of the tissue regions 1 and 4, the tissue region 1 is the largest, so that the tissue region 1 is the representative tissue region. In the group of the tissue regions 2, 5, and 6, the tissue region 6 is the largest, so that the tissue region 6 is the representative tissue region. In the group including only the tissue region 3, the tissue region 3 is the representative tissue region, and in the group including only the tissue region 7, the tissue region 7 is the representative tissue. The overlap processing unit 500 holds information regarding each representative tissue region.

Fig. 13(C) depicts an example of the representative tissue region generated from each group (each link list). The tissue regions 1, 6, 3, and 7 are selected as the representative tissue regions.

As described above, according to the modification example 1, it is possible to detect a group of tissue regions overlapping each other with less computational complexity. For example, computational complexity increases when the contour-based determination is performed on all the sets of the tissue regions 1 to 7, but the sets to be subjected to the contour-based determination can be narrowed down by the rough determination, which allows a reduction in computational complexity.

### (Modification Example 2)

When the target region is set, the target region may be set for each region (unit region) obtained by imaging the biological sample S. With this configuration, the boundary of the target region coincides with the boundary of the imaged unit region (the margin region in the target region is formed by the unit region), the image of the target region can be easily acquired. It is only required that the image be decoded for each unit region, the image of the target region can be acquired at high speed with less memory consumption.

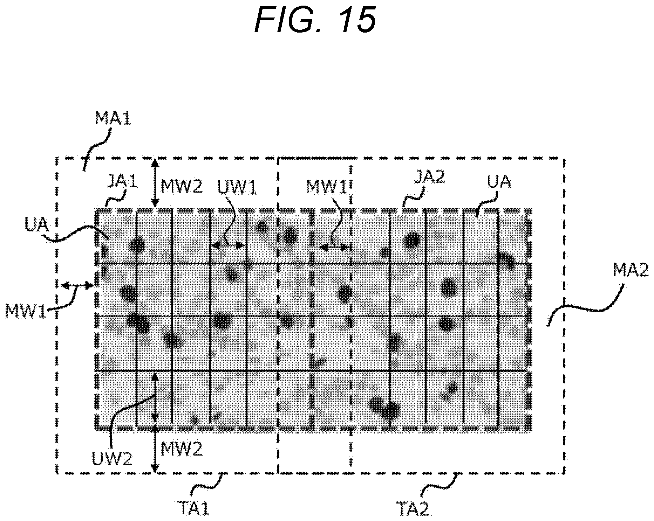

Fig. 15 is a diagram depicting a specific example of the modification example 2. The small region JA1 includes 24 unit regions UA, and the small region JA2 also includes 24 unit regions UA. Although only two small regions are depicted in the drawing, other small regions are actually present such as a small region adjacent to the lower side of each of the small regions JA1 and JA2 and a small region adjacent to the right side of the small region JA2.

As described above, the unit region UA is a region to be a unit of imaging when the imaging unit (signal acquisition unit 113) images the biological sample S. A horizontal width MW1 of the left and right margin regions MA1 is the same size as a horizontal width UW1 of the unit region. A vertical width MW2 of the upper and lower margin regions MA1 is the same size as a vertical width UW2 of the unit region. It is therefore possible to acquire the image of the target region TA1 by reading and decoding the images (unit images) of the unit regions UA included in the target region TA1.

In case where the margin region is not formed in units of the unit regions, in order to acquire the image of the margin region included in the target region TA1, it is necessary to specify a portion of the small region JA2 where the small region JA2 overlaps the target region TA1, and acquire an image of the specified portion. Similarly, it is necessary to specify a portion of each small region (not depicted) adjacent to the lower side and the lower right side of the small region JA1 where the small region overlaps the target region TA1 and acquire an image of the specified portion. A large amount of memory is required for the processing of specifying the overlapping portion, and the processing delays accordingly. On the other hand, in the present modification example, since it is only necessary to read the image (unit image) of the unit region captured in advance, the image of the target region TA1 can be acquired at high speed with less amount of memory.

Here, the image (unit image) of the unit region may be compressed for each unit region with a different compression parameter such as a quality value of the image (Quality value of Jpeg). For example, an image including a large number of cells may be compressed with a high quality compression parameter, while an image including a small number of cells or no cells may be compressed with a low quality compression parameter. In a case where a machine learning model is used in tissue detection, a model may be prepared for each quality, and a model to be used (tissue detection method) may be switched for each small region. For example, in a case where only a single unit region is present in the small region, a model associated with a compression parameter of the image (unit image) of the unit region is used. In a case where a plurality of images is included in the small region, a model associated with a compression parameter applied in common to the largest number of unit images or a model associated with a compression parameter indicating the highest quality is used. With this configuration, an improvement in detection accuracy can be expected. In a case where tissue detection is performed using a classical method instead of a machine learning model, it is sufficient that detection parameters be switched instead of switching models. Switching models or switching detection parameters is an example of switching tissue detection methods.

### (Modification Example 3)

In the description of the above-described embodiment, it has been described that when the region of the biological sample S is divided and then imaged, the imaged regions may overlap each other (that is, imaging may be performed with a margin added to the segment region (unit region). In the present modification example, an imaging region is set in the biological sample S with an imaging size equal to the size of the target region, and imaging is performed. At this time, imaging is performed with the imaging region overlapping the imaging region to be set next by the size of the margin region included in the target region. As described above, a first imaging region is set in the biological tissue, the first imaging region is imaged, a next second imaging region is set with the second imaging region overlapping the first imaging region, and the second imaging region is imaged. An image captured of the first imaging region is used as the image of the first target region, and an image captured of the second imaging region is used as the image of the second target region. Thereafter, similar processing is repeated.

Such an operation allows the image of the target region to be easily acquired before the imaging of the biological sample S is completed, and allows the processing of the above-described embodiment to be started immediately after the start of imaging. That is, it is possible to perform the tissue detection processing (S104) and the overlap detection/overlap elimination processing (S107) while imaging the biological sample S. This makes it easy to hide latency due to imaging, image processing, slide position movement, and the like, leading to a reduction in processing time.

Note that the imaging unit (signal acquisition unit 113) can extract an image of the segment region (unit region) from the image captured of the imaging region including the margin, and acquire a set of the extracted images as the pathological image or the processing target image. The acquired pathological image or processing target image is transmitted to the image DB 20 and stored in the image DB 20.

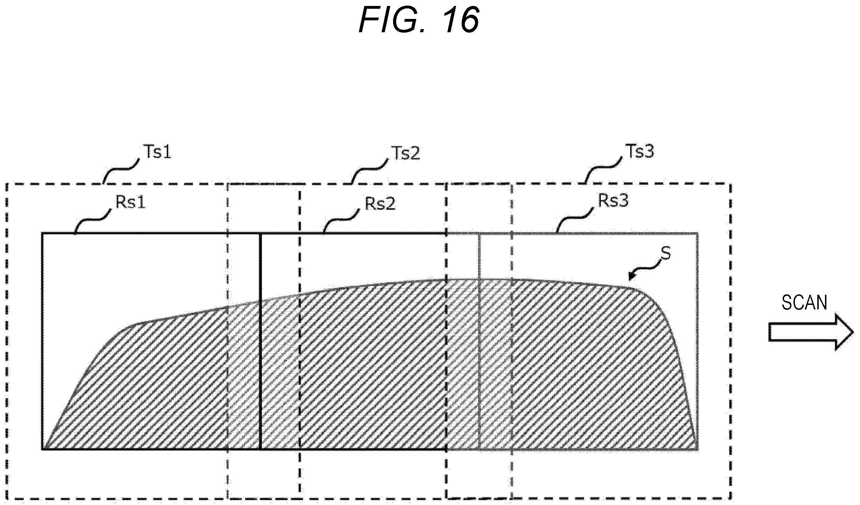

Fig. 16 is a diagram depicting a specific example of the modification example 3. The imaging unit (signal acquisition unit 113) performs a split scan on the biological sample S (a part of the biological sample S is depicted in the drawing). A region including the biological sample S is divided by the size of the split scan into segment regions (unit regions) Rs1, Rs2, Rs3, .... For each segment region Rs, the margin region surrounding the segment region Rs is added, and the segment region to which the margin region is added is imaged as an imaging region (referred to as a margin-added scan region Ts). Specifically, first, a margin-added scan region Ts1 including the segment region Rs1 is set as the imaging region, and imaging is performed. Next, the positional relationship between the microscope device 110 and the sample placement unit 114 is adjusted, and the margin-added scan region is moved rightward by the width of the segment region. At the position after the movement, a margin-added scan region Ts2 including the segment region Rs2 is set as an imaging region, and imaging is performed. Thereafter, the scan is continuously performed in a similar manner.

The image captured of the margin-added scan region is transmitted by the tissue detection unit 400. The processing of the above-described embodiment is performed using, as it is, the image of the margin-added scan region sequentially transmitted from the signal acquisition unit 113 as the image of the target region. An image of a portion corresponding to the segment region in the image of the margin-added scan region corresponds to the image of the small region. An image of a portion other than the segment region in the image of the margin-added scan region corresponds to the image of the margin region in the target region.

In the image DB 20, the image of the segment region (unit region) in the margin-added scan region may be extracted and stored. The pathological image can be acquired from a set of extracted images. As described above, the acquisition of the pathological image and the processing (tissue detection processing and overlap detection and overlap elimination processing) of the present embodiment described above can be performed simultaneously.

The method applied to the split scan in the modification example 3 may be any one of the methods in Figs. 2(A) and 2(B) given in the above-described embodiment.

Note that the above-described embodiment illustrates examples for embodying the present disclosure, and the present disclosure can be implemented in various other forms. For example, various modifications, substitutions, omissions, or combinations thereof can be made without departing from the gist of the present disclosure. Such modifications, substitutions, omissions, and the like also fall within the scope of the present disclosure and further fall within the scope of the invention recited in the claims and the equivalents thereof.

Furthermore, the effects of the present disclosure described herein are merely examples, and other effects may be provided.

Note that the present disclosure may have the following configurations.

### [Item 1]

A medical image analysis device including:
a region setting unit configured to set, in a processing target image obtained by imaging a biological tissue, a first region and a second region partially overlapping the first region; and
a specifying unit configured to specify a first tissue region and a second tissue region, the first tissue region being a region of a tissue included in the first region, the second tissue region being a region of a tissue included in the second region, in which
the specifying unit includes
an overlap processing unit configured to process the first tissue region and the second tissue region at least partially overlapping the first tissue region to set a third tissue region.

### [Item 2]

The medical image analysis device described in item 1, in which
the overlap processing unit selects one of the first tissue region and the second tissue region at least partially overlapping each other, and sets the selected tissue region as the third tissue region.

### [Item 3]

The medical image analysis device described in item 2, in which
the overlap processing unit selects one of the first tissue region and the second tissue region on the basis of a size of the first tissue region and a size of the second tissue region.

### [Item 4]

The medical image analysis device described in any one of items 1 to 3, in which
the overlap processing unit integrates the first tissue region and the second tissue region at least partially overlapping each other into the third tissue region.

### [Item 5]

The medical image analysis device described in any one of items 1 to 4, in which
the overlap processing unit divides the first tissue region and the second tissue region at least partially overlapping each other into a plurality of segment tissue regions, and sets each of the segment tissue regions as the third tissue region.

### [Item 6]

The medical image analysis device described in any one of items 1 to 5, in which
the overlap processing unit generates a detection result image showing the first tissue region, the second tissue region, and the third tissue region.

### [Item 7]

The medical image analysis device described in any one of items 1 to 6, in which
the overlap processing unit
calculates a first circumscribed shape circumscribing the first tissue region and calculates a second circumscribed shape circumscribing the second tissue region,
determines whether or not the first circumscribed shape and the second circumscribed shape at least partially overlap each other, and
in a case where the first circumscribed shape and the second circumscribed shape do not at least partially overlap each other, determines that the first tissue region included in the first circumscribed shape and the first tissue region included in the second circumscribed shape do not overlap each other.

### [Item 8]

The medical image analysis device described in item 7, in which
in a case where the first circumscribed shape and the second circumscribed shape at least partially overlap each other, the overlap processing unit determines whether or not the first tissue region included in the first circumscribed shape and the first tissue region included in the second circumscribed shape at least partially overlap each other.

### [Item 9]

The medical image analysis device described in item 7 or 8, in which
the first circumscribed shape and the second circumscribed shape are rectangular.

### [Item 10]

The medical image analysis device described in any one of items 1 to 9, in which
the processing target image is divided into a plurality of unit regions,
the processing target image includes a plurality of unit images corresponding to the plurality of unit regions, and
the region setting unit sets the first region and the second region in units of the unit regions.

### [Item 11]

The medical image analysis device described in item 10, further including
the overlap processing unit configured to generate first data in which information regarding the first tissue region is associated with the unit image including the first tissue region, second data in which information regarding the second tissue region is associated with the unit image including the second tissue region, and third data in which information regarding the third tissue region is associated with the unit image including the third tissue region.

### [Item 12]

The medical image analysis device described in item 10 or 11, in which
for the specification, processing of specifying the first tissue region in accordance with a compression parameter for each unit image included in the first region is performed, and processing of specifying the second tissue region in accordance with a compression parameter for each unit image included in the second region is performed.

### [Item 13]

The medical image analysis device described in any one of items 1 to 12, further including
an imaging unit configured to set a first imaging region for the biological tissue in accordance with an imaging size equal to a size of the first region or a size of the second region, images the first imaging region, sets a next second imaging region partially overlapping the first imaging region, and images the second imaging region, in which
an image of the first region is an image captured of the first imaging region, and
an image of the second region is an image captured of the second imaging region.

### [Item 14]

The medical image analysis device described in item 6, further including
a display unit configured to display the detection result image.

### [Item 15]

The medical image analysis device described in any one of items 1 to 14, further including:
a display unit configured to display an image including the biological tissue; and
a processing target region setting unit configured to receive instruction information for specifying a region in the image displayed by the display unit, and set an image included in the region specified by the instruction information as the processing target image.

### [Item 16]

A medical image analysis method including:
setting, in a processing target image obtained by imaging a biological tissue, a first region and a second region partially overlapping the first region; and
specifying a first tissue region and a second tissue region, the first tissue region being a region of a tissue included in the first region, the second tissue region being a region of a tissue included in the second region, in which
the first tissue region and the second tissue region at least partially overlapping the first tissue region are processed to set a third tissue region.

### [Item 17]

A medical image analysis system including:
an imaging unit configured to image a biological tissue to acquire a processing target image; and
an information processing unit, in which
the information processing unit
sets, in the processing target image, a first region and a second region partially overlapping the first region,
specifies a first tissue region and a second tissue region, the first tissue region being a region of a tissue included in the first region, the second tissue region being a region of a tissue included in the second region, and
processes the first tissue region and the second tissue region at least partially overlapping the second tissue region to set a third tissue region.

### [Item 18]

The medical image analysis system described in item 17, in which
the information processing unit executes a program to perform processing of setting the first region and the second region, processing of specifying the first tissue region and the second tissue region, and processing of setting the third tissue region.

### [Item 19]

The medical image analysis system described in item 18, further including
a storage unit in which the program is stored, in which
the information processing unit reads the program from the storage unit and executes the program.

### REFERENCE SIGNS LIST

- 1: Medical image analysis system
- 10: Medical image analysis device
- 20: Image database
- 30: Operation device
- 40: Detection result database
- 100: Microscope system
- 110: Microscope device
- 111: Light irradiation unit
- 112: Optical unit
- 113: Signal acquisition unit
- 114: Sample placement unit
- 120: Control unit (control device)
- 130: Information processing unit (information processing device)
- 200: Processing target region setting unit
- 300: Region setting unit
- 400: Tissue detection unit (specifying unit)
- 500: Overlap processing unit (specifying unit)
- 600: Output unit (display unit)
- 610: Pathological image display unit
- 620: Detection result display unit
- 1001: Processing target image
- 1002: Small region

## Claims

1. A medical image analysis device comprising:
a region setting unit configured to set, in a processing target image obtained by imaging a biological tissue, a first region and a second region partially overlapping the first region; and
a specifying unit configured to specify a first tissue region and a second tissue region, the first tissue region being a region of a tissue included in the first region, the second tissue region being a region of a tissue included in the second region, wherein
the specifying unit includes
an overlap processing unit configured to process the first tissue region and the second tissue region at least partially overlapping the first tissue region to set a third tissue region.

2. The medical image analysis device according to claim 1, wherein
the overlap processing unit selects one of the first tissue region and the second tissue region at least partially overlapping each other, and sets the selected tissue region as the third tissue region.

3. The medical image analysis device according to claim 2, wherein
the overlap processing unit selects one of the first tissue region and the second tissue region on a basis of a size of the first tissue region and a size of the second tissue region.

4. The medical image analysis device according to claim 1, wherein
the overlap processing unit integrates the first tissue region and the second tissue region at least partially overlapping each other into the third tissue region.

5. The medical image analysis device according to claim 1, wherein
the overlap processing unit divides the first tissue region and the second tissue region at least partially overlapping each other into a plurality of segment tissue regions, and sets each of the segment tissue regions as the third tissue region.

6. The medical image analysis device according to claim 1, wherein
the overlap processing unit generates a detection result image showing the first tissue region, the second tissue region, and the third tissue region.

7. The medical image analysis device according to claim 1, wherein
the overlap processing unit
calculates a first circumscribed shape circumscribing the first tissue region and calculates a second circumscribed shape circumscribing the second tissue region,
determines whether or not the first circumscribed shape and the second circumscribed shape at least partially overlap each other, and
in a case where the first circumscribed shape and the second circumscribed shape do not at least partially overlap each other, determines that the first tissue region included in the first circumscribed shape and the first tissue region included in the second circumscribed shape do not overlap each other.

8. The medical image analysis device according to claim 7, wherein
in a case where the first circumscribed shape and the second circumscribed shape at least partially overlap each other, the overlap processing unit determines whether or not the first tissue region included in the first circumscribed shape and the first tissue region included in the second circumscribed shape at least partially overlap each other.

9. The medical image analysis device according to claim 7, wherein
the first circumscribed shape and the second circumscribed shape are rectangular.

10. The medical image analysis device according to claim 1, wherein
the processing target image is divided into a plurality of unit regions,
the processing target image includes a plurality of unit images corresponding to the plurality of unit regions, and
the region setting unit sets the first region and the second region in units of the unit regions.

11. The medical image analysis device according to claim 10, further comprising
the overlap processing unit configured to generate first data in which information regarding the first tissue region is associated with the unit image including the first tissue region, second data in which information regarding the second tissue region is associated with the unit image including the second tissue region, and third data in which information regarding the third tissue region is associated with the unit image including the third tissue region.

12. The medical image analysis device according to claim 10, wherein
for the specification, processing of specifying the first tissue region in accordance with a compression parameter for each unit image included in the first region is performed, and processing of specifying the second tissue region in accordance with a compression parameter for each unit image included in the second region is performed.

13. The medical image analysis device according to claim 1, further comprising
an imaging unit configured to set a first imaging region for the biological tissue in accordance with an imaging size equal to a size of the first region or a size of the second region, images the first imaging region, sets a next second imaging region partially overlapping the first imaging region, and images the second imaging region, wherein
an image of the first region is an image captured of the first imaging region, and
an image of the second region is an image captured of the second imaging region.

14. The medical image analysis device according to claim 6, further comprising
a display unit configured to display the detection result image.

15. The medical image analysis device according to claim 1, further comprising:
a display unit configured to display an image including the biological tissue; and
a processing target region setting unit configured to receive instruction information for specifying a region in the image displayed by the display unit, and set an image included in the region specified by the instruction information as the processing target image.

16. A medical image analysis method comprising:
setting, in a processing target image obtained by imaging a biological tissue, a first region and a second region partially overlapping the first region; and
specifying a first tissue region and a second tissue region, the first tissue region being a region of a tissue included in the first region, the second tissue region being a region of a tissue included in the second region, wherein
the first tissue region and the second tissue region at least partially overlapping the first tissue region are processed to set a third tissue region.

17. A medical image analysis system comprising:
an imaging unit configured to image a biological tissue to acquire a processing target image; and
an information processing unit, wherein
the information processing unit
sets, in the processing target image, a first region and a second region partially overlapping the first region,
specifies a first tissue region and a second tissue region, the first tissue region being a region of a tissue included in the first region, the second tissue region being a region of a tissue included in the second region, and
processes the first tissue region and the second tissue region at least partially overlapping the second tissue region to set a third tissue region.

18. The medical image analysis system according to claim 17, wherein
the information processing unit executes a program to perform processing of setting the first region and the second region, processing of specifying the first tissue region and the second tissue region, and processing of setting the third tissue region.

19. The medical image analysis system according to claim 18, further comprising
a storage unit in which the program is stored, wherein
the information processing unit reads the program from the storage unit and executes the program.
